# EUROPÄISCHE PATENTANMELDUNG

(11) **EP 4 331 330 A1**
(43) Veröffentlichungstag der Anmeldung: **06.03.2024**
(21) Anmeldenummer: 23401032.0
(22) Anmeldetag: 28.08.2023
(51) Int. Cl.: A01B 15/18, A01B 15/02

(54) **TRÄGERVORRICHTUNG, VORSCHÄLERVORRICHTUNG UND BODENBEARBEITUNGS- EINHEIT**

(30) Priorität: 05.09.2022 DE 102022122343
(71) Anmelder: Amazonen-Werke H. Dreyer SE & Co. KG, 49205 Hasbergen (DE)
(72) Erfinder: Peters, Hendrik, 49525 Lengerich (DE); Rehnen, Pascal, 49328 Melle (DE)

(57) **Zusammenfassung**

Die Erfindung betrifft eine Trägervorrichtung (10) zum Tragen eines Bodenbearbeitungswerkzeugs für ein landwirtschaftliches Bodenbearbeitungsgerät (300), insbesondere eines Vorschälers (102) für einen Pflug, mit einem ersten Trägerkörper (12), welcher dazu eingerichtet ist, an einem Rahmen (302) des landwirtschaftlichen Bodenbearbeitungsgeräts (300) befestigt zu werden und einem zweiten Trägerkörper (14), welcher dazu eingerichtet ist, an dem ersten Trägerkörper (12) befestigt zu werden und einen Vorschäler (102) zu tragen, wobei der erste Trägerkörper (12) und der zweite Trägerkörper (14) kontaktbehaftet in zwei Montagestellungen direkt aneinander montierbar sind.

## Beschreibung

Die Erfindung betrifft eine Trägervorrichtung zum Tragen eines Bodenbearbeitungswerkzeugs für ein landwirtschaftliches Bodenbearbeitungsgerät nach dem Oberbegriff des Patentanspruchs 1, eine Vorschälervorrichtung für ein landwirtschaftliches Bodenbearbeitungsgerät nach dem Oberbegriff des Patentanspruchs 13 sowie eine Bodenbearbeitungseinheit für ein landwirtschaftliches Bodenbearbeitungsgerät nach dem Oberbegriff des Patentanspruchs 16.

Landwirtschaftliche Bodenbearbeitungsgeräte umfassen üblicherweise Bodenbearbeitungswerkzeuge, welche bei einem Bearbeitungsvorgang einer landwirtschaftlichen Nutzfläche den Boden durch einen Bodeneingriff bearbeiten. Landwirtschaftliche Pflüge sind für die Bodenbearbeitung insbesondere mit Pflugkörpern und Vorschälern ausgestattet, wobei die Vorschäler den Boden unmittelbar vor den Pflugkörpern aufbrechen, die oberste Erdschicht mit Ernterückständen abtragen und diese zur Seite in die mittels der Pflugkörper in den Boden gezogenen Furchen werfen beziehungsweise dort ablegen.

Sich ändernde Umgebungsbedingungen, beispielsweise wechselnder Bewuchs der Nutzfläche, Änderungen der Bodenbeschaffenheit oder Änderungen der Arbeits- oder Fahrgeschwindigkeit des Pfluges können die Arbeitsparameter der Vorschäler, insbesondere die Wurfweite und den Wurfwinkel des abgetragenen Erdmaterials und der Ernterückstände, beeinflussen, wobei es dabei zu unbeabsichtigten Änderungen der Arbeitsparameter und damit einhergehenden Einbußen der Arbeitsqualität des Pfluges kommen kann. Deshalb ist es erforderlich, die Vorschäler mittels einer Wurfwinkelverstellung auf sich ändernde Umgebungsbedingungen einstellen zu können, sodass das von den Vorschälern abgetragene Erdmaterial und die Ernterückstände stets mit einem beabsichtigten Wurfwinkel beziehungsweise mit einer beabsichtigten Wurfweite in die Furche befördert wird.

Im Stand der Technik ist bereits erkannt worden, dass ein einstellbarer Wurfwinkel der Vorschäler in der Praxis sinnvoll ist. Aus der Druckschrift DE 43 39 254 B4 ist beispielsweise eine Vorschälerverstellung bekannt, welche mittels einer Stelleinrichtung über eine mit Hebelarmen mit den Vorschälerkonsolen verbundene Verbindungsstange alle Vorschäler eines Pfluges gemeinsam verschwenkt.

Aus der Druckschrift EP 2 314 139 B1 ist ferner bekannt, den Wurfwinkel der Vorschäler eines Pfluges durch steckbare Keile in einer Stelleinrichtung der Vorschäler zwischen der Führung und dem Stiel der Vorschäler zu verstellen.

Allerdings sind die aus dem Stand der Technik bekannten Wurfwinkelverstellungen für Vorschäler mit Nachteilen verbunden und in der Praxis verbesserungswürdig. Eine Stelleinrichtung, welche die Vorschäler über eine Verbindungsstange sowie mehrere mit den Vorschälerkonsolen verbundene Hebelarme einstellt, ist aufgrund der Vielzahl an beteiligten bewegten Bauteilen mit einem erheblichen technischen Aufwand verbunden, wodurch die Fehler- und Ausfallanfälligkeit, insbesondere durch Verschleiß und Verschmutzung der mechanischen Bauteile der Stelleinrichtung, wie Gelenke, sowie die Herstellungs- und Wartungskosten erhöht werden. Auch bei der Verstellung des Wurfwinkels mittels eines Keils kommen zusätzliche Verstellelemente zum Einsatz, um die Winkelverstellung zu realisieren. Zusätzliche Bauteile treiben die Kosten in die Höhe und erhöhen die Fehleranfälligkeit. So muss bei der Winkelverstellung mittels eines Keils durch eine zusätzliche Fixierung, beispielsweise mit Klammern oder Bolzen, stets sichergestellt werden, dass der Keil während der Bodenbearbeitung in seiner Position bleibt.

Die der Erfindung zugrunde liegende Aufgabe besteht also darin, eine Winkelverstellung für ein Bodenbearbeitungswerkzeug an einem Bodenbearbeitungsgerät zu realisieren, welche ohne zusätzliche Bauteile erfolgen kann, sodass der Aufwand, die Fehleranfälligkeit und die Kosten der Winkelverstellung reduziert werden.

Die Aufgabe wird gelöst mit einer Trägervorrichtung der eingangs genannten Art, wobei der erste Trägerkörper und der zweite Trägerkörper in der ersten Montagestellung eine erste Längsdrehwinkelbeziehung und in der zweiten Montagestellung eine zweite Längsdrehwinkelbeziehung zueinander aufweisen.

Dadurch, dass die Wurfwinkelverstellung über zwei unterschiedliche Längsdrehwinkelbeziehungen in zwei unterschiedlichen Montagestellungen des ersten und des zweiten Trägerkörpers realisiert wird, kann auf zusätzliche Bauteile, wie Keile, oder komplexe Stelleinrichtungen, wie Verbindungsstangen und Hebelarme, verzichtet werden. Somit ist die Wurfwinkelverstellung deutlich einfacher aufgebaut, wodurch auch die Herstellung der Bauteile und die Montage der Wurfwinkelverstellung sowie die Montage der gesamten Vorschälerbaugruppe vereinfacht werden können. Da eine geringere Bauteilanzahl hergestellt und verbaut werden muss, sinken zudem die Fertigungs- und Montagekosten. Weiterhin werden Wartungsarbeiten an der Vorschälerbaugruppe erleichtert. Eine geringere Komplexität der Wurfwinkelverstellung hat weiterhin zur Folge, dass die Fehleranfälligkeit der Wurfwinkelverstellung geringer ist und ein zuverlässiger Betrieb sichergestellt werden kann, ohne dass sich der Wurfwinkel während der Bodenbearbeitung unbeabsichtigt verändert.

Die Trägervorrichtung ist vorzugsweise als Vorschälerträger ausgebildet. Die Trägerkörper sind vorzugsweise länglich ausgebildet. Die Trägerkörper sind vorzugsweise als Vierkantstiele ausgebildet. Die Trägerkörper haben vorzugsweise einen im Wesentlichen rechteckigen Querschnitt. Die Trägerkörper sind vorzugsweise aus einem metallischen Werkstoff, beispielsweise aus Stahl oder Aluminium, ausgebildet. Die Trägerkörper können zudem aus einem Kunststoff ausgebildet sein. Die Trägerkörper werden vorzugsweise ohne ein Zwischenstück, beispielsweise ohne einen Keil, direkt aneinander montiert. Die Längsdrehwinkel zwischen dem ersten und dem zweiten Trägerkörper sind vorzugsweise in der ersten Längsdrehwinkelbeziehung und in der zweiten Längsdrehwinkelbeziehung unterschiedlich, sodass sich eine Längsdrehwinkeldifferenz zwischen der ersten und der zweiten Montagestellung ergibt. Ein Längsdrehwinkel ist der Drehwinkel der Trägerkörper zueinander um die Längsachse der Trägerkörper. Vorzugsweise umfasst der zweite Trägerkörper mehrere in Längsrichtung des zweiten Trägerkörpers nebeneinander und beabstandet voneinander angeordnete Ausnehmungen, mittels welcher ein Vorschäler an dem zweiten Trägerkörper montiert werden kann. Mittels der mehreren Ausnehmungen wird eine Tiefenverstellung der Arbeitstiefe des Vorschälers an dem zweiten Trägerkörper ermöglicht. Die Ausnehmungen sind vorzugsweise als Bohrungen ausgebildet. Eine einstellbare Arbeitstiefe des Vorschälers stellt sicher, dass die Arbeitstiefe des Vorschälers an eine Arbeitstiefe eines Pflugkörpers angepasst werden kann. Vorzugsweise wird der Vorschäler mittels einer Vorschälerkonsole über umsteckbare Bolzen in den Bohrungen im zweiten Trägerkörper in der gewünschten Arbeitstiefe montiert.

In einer bevorzugten Ausführungsform der erfindungsgemäßen Trägervorrichtung sind der erste Trägerkörper und der zweite Trägerkörper derart gestaltet, dass der zweite Trägerkörper in der ersten Montagestellung auf einer ersten Seite des ersten Trägerkörpers und in der zweiten Montagestellung auf einer zweiten Seite des ersten Trägerkörpers angeordnet ist, wobei die erste Seite und die zweite Seite des ersten Trägerkörpers vorzugsweise gegenüberliegend angeordnet sind. Vorzugsweise umfasst auch der zweite Trägerkörper eine erste Seite und eine zweite Seite, welche sich gegenüber liegen. Um von der ersten zu der zweiten Montagestellung der Trägervorrichtung zu wechseln, kann der zweite Trägerkörper vorzugsweise von der ersten Seite des ersten Trägerkörpers auf die zweite Seite des ersten Trägerkörpers und von der zweiten Seite auf die erste Seite des ersten Trägerkörpers verbracht und/oder dort befestigt werden. Vorzugsweise erfolgt bei einem Wechsel der Montagestellung keine Drehung des ersten und/oder zweiten Trägerkörpers um im Wesentlichen 180° um seine Längsachse.

In einer anderen bevorzugten Ausführungsform der erfindungsgemäßen Trägervorrichtung umfassen der erste Trägerkörper und der zweite Trägerkörper jeweils einen Montagebereich mit einer ersten und einer zweiten Kontaktfläche, wobei der erste und der zweite Trägerkörper vorzugsweise so gestaltet sind, dass in der ersten Montagestellung die erste Kontaktfläche des ersten Trägerkörpers und die erste Kontaktfläche des zweiten Trägerkörpers kontaktbehaftet und vorzugsweise flächig aneinander montiert sind und in der zweiten Montagestellung die zweite Kontaktfläche des ersten Trägerkörpers und die zweite Kontaktfläche des zweiten Trägerkörpers kontaktbehaftet und vorzugsweise flächig aneinander montiert sind. Die erste Kontaktfläche befindet sich vorzugsweise jeweils auf der ersten Seite des jeweiligen Trägerkörpers. Die zweite Kontaktfläche befindet sich vorzugsweise jeweils auf der zweiten Seite des jeweiligen Trägerkörpers. Im montierten Zustand überlappen sich vorzugsweise die Montagebereiche des ersten und des zweiten Trägerkörpers. Die Montagebereiche sind vorzugsweise im Endbereich des Längsverlaufs des jeweiligen Trägerkörpers angeordnet. Der erste und der zweite Trägerkörper sind im montierten Zustand vorzugsweise derart zueinander ausgerichtet, dass ihre jeweiligen Längsachsen parallel zueinander ausgerichtet sind.

In einer weiteren bevorzugten Ausführungsform der erfindungsgemäßen Trägervorrichtung sind die erste Kontaktfläche und die zweite Kontaktfläche des ersten Trägerkörpers beabstandet zueinander angeordnet und/oder sind die erste Kontaktfläche und die zweite Kontaktfläche des zweiten Trägerkörpers beabstandet zueinander angeordnet. Die Kontaktflächen des ersten Trägerkörpers weisen vorzugsweise einen ersten Kontaktflächenabstand auf. Die Kontaktflächen des zweiten Trägerkörpers weisen vorzugsweise einen zweiten Kontaktflächenabstand auf. Vorzugsweise entspricht der erste Kontaktflächenabstand der Materialstärke des ersten Trägerkörpers und der zweite Kontaktflächenabstand der Materialstärke des zweiten Trägerkörpers. Insbesondere entspricht der jeweilige Kontaktflächenabstand der Materialstärke des jeweiligen Trägerkörpers in seinem jeweiligen Montagebereich. Vorzugsweise werden die Trägerkörper beim Wechsel der Montagestellung ausschließlich in Querrichtung versetzt.

In einer Weiterbildung der erfindungsgemäßen Trägervorrichtung sind in der ersten Montagestellung die zweite Kontaktfläche des ersten Trägerkörpers und die zweite Kontaktfläche des zweiten Trägerkörpers kontaktfrei und voneinander abgewandt ausgerichtet und sind in der zweiten Montagestellung die erste Kontaktfläche des ersten Trägerkörpers und die erste Kontaktfläche des zweiten Trägerkörpers kontaktfrei und voneinander abgewandt ausgerichtet. Die Ausrichtung der Kontaktflächen zueinander wird vorzugsweise durch Umsetzen einer Drehbewegung des ersten und/oder des zweiten Trägerkörpers eingestellt.

Es ist weiterhin eine erfindungsgemäße Trägervorrichtung bevorzugt, bei welcher die erste und die zweite Kontaktfläche des ersten Trägerkörpers parallel zueinander angeordnet sind und/oder die erste und die zweite Kontaktfläche des zweiten Trägerkörpers geneigt zueinander angeordnet sind. Vorzugsweise sind die Kontaktflächen des zweiten Trägerkörpers um die Längsachse des zweiten Trägerkörpers geneigt. In der ersten Montagestellung ist vorzugsweise die zweite Kontaktfläche des zweiten Trägerkörpers geneigt zu der ersten Kontaktfläche des zweiten Trägerkörpers und zur ersten und zweiten Kontaktfläche des ersten Trägerkörpers angeordnet. In der zweiten Montagestellung ist vorzugsweise die erste Kontaktfläche des zweiten Trägerkörpers geneigt zur zweiten Kontaktfläche des zweiten Trägerkörpers und zur ersten und zweiten Kontaktfläche des ersten Trägerkörpers angeordnet. In der ersten Montagestellung sind vorzugsweise die erste und zweite Kontaktfläche des ersten Trägerkörpers sowie die erste Kontaktfläche des zweiten Trägerkörpers parallel zueinander angeordnet. In der zweiten Montagestellung sind vorzugsweise die erste und die zweite Kontaktfläche des ersten Trägerkörpers sowie die zweite Kontaktfläche des zweiten Trägerkörpers parallel zueinander angeordnet.

Es ist außerdem eine erfindungsgemäße Trägervorrichtung vorteilhaft, bei welcher der erste Trägerkörper und der zweite Trägerkörper jeweils zumindest zwei Montageausnehmungen aufweisen, wobei eine erste Montageausnehmung des ersten Trägerkörpers und eine erste Montageausnehmung des zweiten Trägerkörpers ein erstes Ausnehmungspaar und eine zweite Montageausnehmung des ersten Trägerkörpers und eine zweite Montageausnehmung des zweiten Trägerkörpers ein zweites Ausnehmungspaar bilden. Vorzugsweise sind der erste Trägerkörper und der zweite Trägerkörper in der ersten Montagestellung über das erste Ausnehmungspaar und in der zweiten Montagestellung über das zweite Ausnehmungspaar aneinander montierbar. Die Montageausnehmungen sind vorzugsweise Bohrlöcher. Vorzugsweise erstrecken sich die Montageausnehmungen über die gesamte Materialstärke des ersten und/oder des zweiten Trägerkörpers. Für unterschiedliche Montagestellungen sind vorzugsweise unterschiedliche Bohrlöcher zu verwenden, sodass die Montage nur in den zwei festgelegten Montagestellungen möglich ist und die Bohrlöcher nicht vertauscht werden können.

In einer Weiterbildung der erfindungsgemäßen Trägervorrichtung befinden sich die Montageausnehmungen des ersten Ausnehmungspaars in der ersten Montagestellung in Volldeckung und vorzugsweise in der zweiten Montagestellung in Teildeckung und befinden sich die Montageausnehmungen des zweiten Ausnehmungspaars in der zweiten Montagestellung in Volldeckung und vorzugsweise in der ersten Montagestellung in Teildeckung. Vorzugsweise sind die Montageausnehmungen des ersten Ausnehmungspaars in der zweiten Montagestellung versetzt zueinander angeordnet. Vorzugsweise sind die Montageausnehmungen des zweiten Ausnehmungspaars in der ersten Montagestellung versetzt zueinander angeordnet. Sind die jeweiligen Montageausnehmungen versetzt zueinander angeordnet, haben die Montageausnehmungen unterschiedliche Längserstreckungsrichtungen und/oder sind die Symmetrielinien der Montageausnehmungen nicht kollinear zueinander ausgerichtet. Bei einer Teildeckung von Montageausnehmungen ist der nutzbare Bohrlochquerschnitt kleiner als der Bohrlochdurchmesser der einzelnen Bohrungen des jeweiligen Ausnehmungspaars. Durch die Volldeckung und/oder Teildeckung der Montageausnehmungen können die Trägerkörper nur in zwei eindeutigen Montagestellungen miteinander verbunden werden. Eine Verwechslung der beiden Montagestellung wird somit vermieden.

In einer anderen bevorzugten Ausführungsform der erfindungsgemäßen Trägervorrichtung sind die Montageausnehmungen in den Montagebereichen des ersten und zweiten Trägerkörpers angeordnet. Vorzugsweise erstrecken sich die Montageausnehmungen zwischen den Kontaktflächen der Montagebereiche. Die Montageausnehmungen sind vorzugsweise derart gestaltet, dass Schraubenköpfe und/oder Mutter eine plane Auflagefläche auf den Kontaktflächen haben, insbesondere durch zu den Schraubenköpfen und/oder Muttern passenden Ausnehmungsvergrößerungen, beispielsweise Senkungen von Bohrlöchern.

In einer weiteren bevorzugten Ausführungsform der erfindungsgemäßen Trägervorrichtung weist der zweite Trägerkörper in seinem Montagebereich einen trapezförmigen Querschnitt auf. Der zweite Trägerkörper weist in seinem Montagebereich in Längsrichtung vorzugsweise einen konstanten Querschnitt auf. Vorzugsweise verringert oder vergrößert sich die Materialstärke des zweiten Trägerkörpers im Montagebereich in einer Querrichtung. Im Montagebereich des zweiten Trägerkörpers ergibt sich somit eine sich keilförmig reduzierende oder zunehmende Materialstärke in Querrichtung des zweiten Trägerkörpers.

In einer Weiterbildung der erfindungsgemäßen Trägervorrichtung ist der Vorschäler derart an dem zweiten Trägerkörper montierbar, dass die Position des Vorschälers quer zu der Längsachse des zweiten Trägerkörpers einstellbar ist. Vorzugsweise können zwischen einer Vorschälerkonsole, mittels welcher der Vorschäler an dem zweiten Trägerkörper montierbar ist, und dem zweiten Trägerkörper eine oder mehrere Zwischenlagen, beispielsweise Bleche, positioniert und/oder montiert werden. Mittels der Zwischenlagen kann vorzugsweise die Position der Vorschälerkonsole und gleichzeitig des an der Vorschälerkonsole angeordneten Vorschälers in Querrichtung des zweiten Trägerkörpers variiert werden. Vorzugsweise kann mittels der Zwischenlagen insbesondere der Abstand des Vorschälers zu dem zweiten Trägerkörper in Querrichtung vergrößert werden. Vorzugsweise wird der Vorschäler im Wesentlichen parallel zum Boden versetzt. Eine Zwischenlage kann beispielsweise zwischen 1 mm und 10 mm, insbesondere 5 mm, dick sein. Durch den Versatz des Vorschälers durch Zwischenlagen wird der sogenannte Überschnitt eingestellt, sodass sichergestellt wird, dass Ernterückstände zuverlässig in die Flugfurche befördert werden. Außerdem kann ein größerer Überschnitt einen Verschleiß der Vorschäler ausgleichen.

Es ist ferner eine erfindungsgemäße Trägervorrichtung vorteilhaft, welche einen dritten Trägerkörper umfasst, welcher dazu eingerichtet ist, gegenüberliegend zum zweiten Trägerkörper an dem ersten Trägerkörper befestigt zu werden und einen weiteren Vorschäler zu tragen, wobei der dritte Trägerkörper und der erste Trägerkörper kontaktbehaftet in zwei Montagestellungen direkt aneinander montierbar sind und der erste Trägerkörper und der dritte Trägerkörper in der ersten Montagestellung eine erste Längsdrehwinkelbeziehung und in der zweiten Montagestellung eine zweite Längsdrehwinkelbeziehung zueinander aufweisen. Der dritte Trägerkörper kann wie der zweite Trägerkörper ausgestaltet sein. Der erste Trägerkörper umfasst vorzugsweise an seinem gegenüberliegenden Ende einen zweiten Montagebereich, welcher wie der erste Montagebereich des ersten Trägerkörpers ausgestaltet sein kann. Der dritte Trägerkörper wird vorzugsweise im zweiten Montagebereich des ersten Trägerkörpers montiert. Mittels des dritten Trägerkörpers kann an dem in Längsrichtung des ersten Trägerkörpers gegenüberliegenden Ende ein zweiter Vorschäler mittels des dritten Trägerkörpers montiert werden. An einem sogenannten Wendepflug sind beispielsweise jeweils zwei sich gegenüberliegend oben und unten montierte Vorschäler montiert. Bei einem solchen Wendepflug ist jeweils ein Paar von Vorschälern insbesondere symmetrisch zum Rahmen montiert.

Die der Erfindung zugrundeliegende Aufgabe wird weiterhin durch eine Vorschälervorrichtung der eingangs genannten Art gelöst, wobei die Trägervorrichtung nach einer der vorstehenden Ausführungsformen ausgebildet ist. Hinsichtlich der Vorteile und Modifikationen der erfindungsgemäßen Vorschälervorrichtung wird auf die Vorteile und Modifikationen der erfindungsgemäßen Trägervorrichtung verwiesen. Vorzugsweise umfasst die Vorschälervorrichtung zudem einen dritten Trägerkörper, sodass ein zweiter Vorschäler gegenüberliegend zum ersten Vorschäler montierbar ist.

In einer bevorzugten Ausführungsform der erfindungsgemäßen Vorschälervorrichtung ist der Vorschäler derart starr an dem zweiten Trägerkörper befestigt, dass sich in der ersten Montagestellung der Trägervorrichtung ein erster Montagewinkel am Vorschäler und in der zweiten Montagestellung der Trägervorrichtung ein zweiter Montagewinkel am Vorschäler einstellt. Vorzugsweise resultieren aus den unterschiedlichen Montagestellungen der Trägervorrichtung bei der Bodenbearbeitung auf einer landwirtschaftlichen Nutzfläche unterschiedliche Erdwurfwinkel und Erdwurfweiten durch unterschiedliche Montagewinkel des Vorschälers, da sich durch die unterschiedlichen Montagewinkel der Bodeneingriff der Vorschäler ändert. Vorzugsweise kann der Montagewinkel des Vorschälers durch die Einstellung der zweiten Montagestellung um einen Winkel zwischen 1 Grad und 20 Grad, vorzugsweise um 10 Grad verändert werden. Vorzugsweise ist der Vorschäler mittels eines oder mehrerer umsteckbarer Bolzen und/oder mittels einer oder mehrerer Schrauben über in Längsrichtung des zweiten Trägerkörpers nebeneinander und beabstandet voneinander angeordneter Ausnehmungen an dem zweiten Trägerkörper befestigt, wobei der Vorschäler wahlweise an einer oder mehrerer der Ausnehmungen montiert werden kann. Mittels der Montage des Vorschälers mittels umsteckbarer Bolzen und/oder Schrauben in einer oder mehrerer der Ausnehmungen wird eine Tiefenverstellung des Vorschälers an dem zweiten Trägerkörper ermöglicht.

In einer Weiterbildung der erfindungsgemäßen Vorschälervorrichtung ist die Position einer Vorschälerspitze des Vorschälers in Bezug auf einen Referenzpunkt am ersten Trägerkörper des Vorschälerträgers in der ersten Montagestellung und in der zweiten Montagestellung des Vorschälerträgers im Wesentlichen gleich. Vorzugsweise ist der Abstand der Vorschälerspitze zum Pflugkörper in beiden Montagestellungen der Trägervorrichtung gleich. Vorzugsweise bleibt die Spitze des Vorschälers in jeder Montagestellung an der gleichen Position.

Die der Erfindung zugrundeliegende Aufgabe wird ferner durch eine Bodenbearbeitungseinheit der eingangs genannten Art gelöst, wobei die Trägervorrichtung nach einer der vorstehenden Ausführungsformen ausgebildet ist und/oder die Vorschälervorrichtung nach einer der vorstehenden Ausführungsformen ausgebildet ist.

Nachfolgend werden bevorzugte Ausführungsformen der Erfindung unter Bezugnahme auf die beiliegenden Zeichnungen näher erläutert und beschrieben. Dabei zeigen:
- Fig. 1A: eine erfindungsgemäße Trägervorrichtung in einer ersten Montagestellung in einer Seitenansicht;
- Fig. 1B: eine erfindungsgemäße Trägervorrichtung in einer zweiten Montagestellung in einer Seitenansicht;
- Fig. 2A: eine erfindungsgemäße Vorschälervorrichtung mit montierten Vorschälern in einer ersten Montagestellung in einer Seitenansicht;
- Fig. 2B: eine erfindungsgemäße Vorschälervorrichtung mit montierten Vorschälern in einer zweiten Montagestellung in einer Seitenansicht;
- Fig. 3: einen Montagebereich eines ersten Trägerkörpers einer erfindungsgemäßen Trägervorrichtung in einer zweiten Montagestellung mit einem an einem zweiten Trägerkörper montierten Vorschäler in einer Detailansicht von vorne;
- Fig. 4: einen Montagebereich des zweiten Trägerkörpers der in der Fig. 3 abgebildeten Trägervorrichtung in einer ersten Montagestellung in einer Detailansicht von vorne;
- Fig. 5: eine erfindungsgemäße Trägervorrichtung in der ersten Montagestellung mit nicht geneigtem Vorschäler in einer Schnittansicht;
- Fig. 6: die in der Fig. 5 abgebildete Trägervorrichtung in der zweiten Montagestellung mit geneigtem Vorschäler in einer Schnittansicht;
- Fig. 7: eine erfindungsgemäße Bodenbearbeitungseinheit mit montierten Pflugkörpern und Vorschälern in einer perspektivischen Darstellung; und
- Fig. 8: ein als Wendepflug ausgebildetes landwirtschaftliches Bodenbearbeitungsgerät mit mehreren erfindungsgemäßen Bodenbearbeitungseinheiten in einer perspektivischen Darstellung.

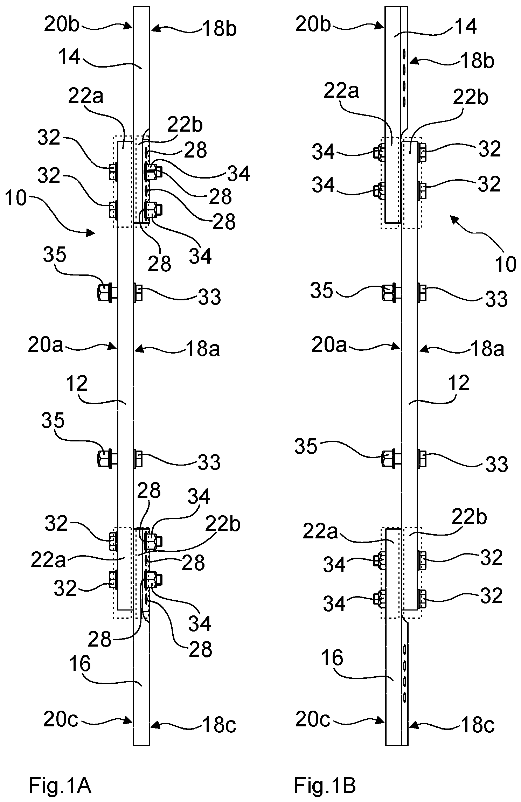

Die Fig. 1A, B zeigen eine Trägervorrichtung 10 in zwei verschiedenen Montagestellungen.

Die Trägervorrichtung 10 umfasst einen ersten Trägerkörper 12, welcher mittels Schrauben 33 und Muttern 35 an einem Rahmen 302 eines landwirtschaftlichen Bodenbearbeitungsgeräts 300 befestigt werden kann. Alternativ ist einer nicht dargestellten Ausführungsform ebenso denkbar, dass der Trägerkörper 12 direkt an einer hydraulischen Steinsicherung oder einer Pflugkörperhaltung befestigt werden kann. Der Trägerkörper 12 ist als länglicher Vierkantstiel ausgebildet. Der Trägerkörper 12 umfasst in seinem oberen und seinem unteren Endbereich jeweils einen Montagebereich 22a, in welchem vier untereinander gleichmäßig beabstandete Montageausnehmungen 28 angeordnet sind. Die Montageausnehmungen 28 des ersten Trägerkörpers 12 sind als Bohrungen ausgebildet, welche sich über die gesamte Materialstärke in Querrichtung des Trägerkörpers 12 erstrecken. Mittels der Montageausnehmungen 28 im Trägerkörper 12 kann im oberen Montagebereich 22a mittels Schrauben 32 und Muttern 34 ein zweiter Trägerkörper 14 und im unteren Montagebereich 22a ein dritter Trägerkörper 16 an dem ersten Trägerkörper 12 befestigt werden. Der erste Trägerkörper 12 umfasst in seinen Montagebereichen 22a auf seiner ersten Seite 18a erste Kontaktflächen 24a und auf seiner zweiten Seite 20a zweite Kontaktflächen 26a.

Der zweite Trägerkörper 14 und der dritte Trägerkörper 16 umfassen jeweils einen Montagebereich 22b, in welchem vier in Längsrichtung der Trägerkörper 14, 16 gleichmäßig beabstandete Montageausnehmungen 28 angeordnet sind. Die Montageausnehmungen 28 der Trägerkörper 14, 16 sind als Bohrungen ausgebildet, welche sich über die gesamte Materialstärke in Querrichtung des jeweiligen Trägerkörpers 14, 16 erstrecken. Die Montageausnehmungen 28 in den Montagebereichen 22b des zweiten und des dritten Trägerkörpers 14, 16 sind den Montageausnehmungen 28 in den Montagebereichen 22a des ersten Trägerkörpers 12 zugeordnet. Der zweite Trägerkörper 14 und der dritte Trägerkörper 16 umfassen in ihren Montagebereichen 22b auf ihrer jeweiligen ersten Seite 18b, 18c jeweils eine erste Kontaktfläche 24b und auf ihrer jeweiligen Seite 20b, 20c jeweils eine zweite Kontaktfläche 26b. Die Kontaktflächen 24a, 24b, 26a, 26b sind plan ausgebildet. Die Trägervorrichtung 10 ist spiegelsymmetrisch aufgebaut.

In Fig. 1A ist die Trägervorrichtung 10 in einer ersten Montagestellung abgebildet. In der ersten Montagestellung der Trägervorrichtung 10 sind der zweite Trägerkörper 14 und der dritte Trägerkörper 16 jeweils mit ihrer ersten Kontaktfläche 24b flächig und kontaktbehaftet in ihren Montagebereichen 22b mit dem ersten Trägerkörper 12 an seinen ersten Kontaktflächen 24a in den Montagebereichen 22a des ersten Trägerkörpers 12 befestigt. Die Trägerkörper 12, 14, 16 werden in der ersten Montagestellung mittels jeweils Montageausnehmungen 28 des zweiten Trägerkörpers 14 und des dritten Trägerkörpers 16 mit jeweils zwei für die erste Montagestellung vorgesehenen Montageausnehmungen 28 des ersten Trägerkörpers 12 verschraubt. Die jeweils zwei Montageausnehmungen 28 der Trägerkörper 14, 16 sind jeweils zwei Montageausnehmungen 28 in jeweils einem Montagebereich 22a des ersten Trägerkörpers zugeordnet. Einander zugeordnete Montageausnehmungen 28 bilden in der ersten Montagestellung jeweils ein Ausnehmungspaar 30a. Die jeweils ein Ausnehmungspaar 30a bildenden Montageausnehmungen 28 sind so zueinander positioniert, dass sie in Volldeckung sind, also die Bohrungsachsen in Verlängerung zueinander liegen. In der ersten Montagestellung sind die restlichen, nicht verwendeten und für die zweite Montagestellung vorgesehenen Montageausnehmungen 28 in Teildeckung, so dass die Bohrungsachsen nicht in Verlängerung zueinander liegen, also in einem Winkel zueinander und/oder versetzt angeordnet sein können. In der ersten Montagestellung ist der erste Trägerkörper 12 derart mit dem zweiten Trägerkörper 14 und dem dritten Trägerkörper 16 verschraubt, dass die Kontaktflächen 24a, 26a des ersten Trägerkörpers 12 parallel zu den Oberflächen des zweiten und dritten Trägerkörpers 14, 16 außerhalb der Montagebereiche 22b des zweiten und dritten Trägerkörpers 14, 16 liegenden Bereiche ausgerichtet sind.

In Fig. 1B ist die Trägervorrichtung 10 in einer zweiten Montagestellung abgebildet. In der zweiten Montagestellung der Trägervorrichtung 10 sind der zweite Trägerkörper 14 und der dritte Trägerkörper 16 jeweils mit ihrer zweiten Kontaktfläche 26b flächig und kontaktbehaftet in ihren Montagebereichen 22b mit dem ersten Trägerkörper 12 an den zweiten Kontaktflächen 26a in den Montagebereichen 22a des ersten Trägerkörpers 12 befestigt. Die Trägerkörper 12, 14, 16 werden in der zweiten Montagestellung mittels jeweils zwei Montageausnehmungen 28 des zweiten Trägerkörpers 14 und des dritten Trägerkörpers 16 mit jeweils zwei für die zweite Montagestellung vorgesehenen Montageausnehmungen 28 des ersten Trägerkörpers 12 verschraubt. Die jeweils zwei Montageausnehmungen 28 der Trägerkörper 14, 16 sind jeweils zwei Montageausnehmungen 28 in jeweils einem Montagebereich 22a des ersten Trägerkörpers zugeordnet. Einander zugeordnete Montageausnehmungen 28 bilden in der zweiten Montagestellung jeweils ein Ausnehmungspaar 30b. Die jeweils ein Ausnehmungspaar 30b bildenden Montageausnehmungen 28 sind so zueinander positioniert, dass sie in Volldeckung sind - ihre Bohrungsachsen liegen folglich in Verlängerung zueinander und bilden eine gemeinsame Achse. In der zweiten Montagestellung sind die restlichen, nicht verwendeten und für die erste Montagestellung vorgesehenen Montageausnehmungen 28 in Teildeckung; die Bohrungsachsen sind also versetzt und/oder in einem Winkel zueinander angeordnet. In der zweiten Montagestellung ist der erste Trägerkörper 12 derart mit dem zweiten Trägerkörper 14 und dem dritten Trägerkörper 16 verschraubt, dass die Oberflächen des zweiten und dritten Trägerkörpers 14, 16 außerhalb der Montagebereiche 22b des zweiten und dritten Trägerkörpers 14, 16 liegenden Bereiche geneigt zu den Kontaktflächen 24a, 26a des ersten Trägerkörpers 12 ausgerichtet sind.

Durch die Teildeckung der nicht für die jeweilige Montagestellung vorgesehen Montageausnehmungen 28 wird sichergestellt, dass die Trägervorrichtung 10 mit den für die Montage vorgesehenen Schrauben 32 und Muttern 34 ausschließlich in jeweils einer der beiden Montagestellungen montiert werden kann. So wird eine fehlerhafte Montage und daraus resultierende Beschädigungen an der Trägervorrichtung vermieden. Um ein Verkippen und/oder Verdrehen zueinander der miteinander verschraubten Trägerkörper 12, 14, 16 zu verhindern, wird zwischen den zwei zum Montieren der Trägervorrichtung 10 verwendeten Montageausnehmungen 28 jeweils eine Montageausnehmung 28 ausgelassen, um den Abstand zwischen den verwendeten Montageausnehmungen 28 in Längsrichtung der Trägervorrichtung 10 zu vergrößern.

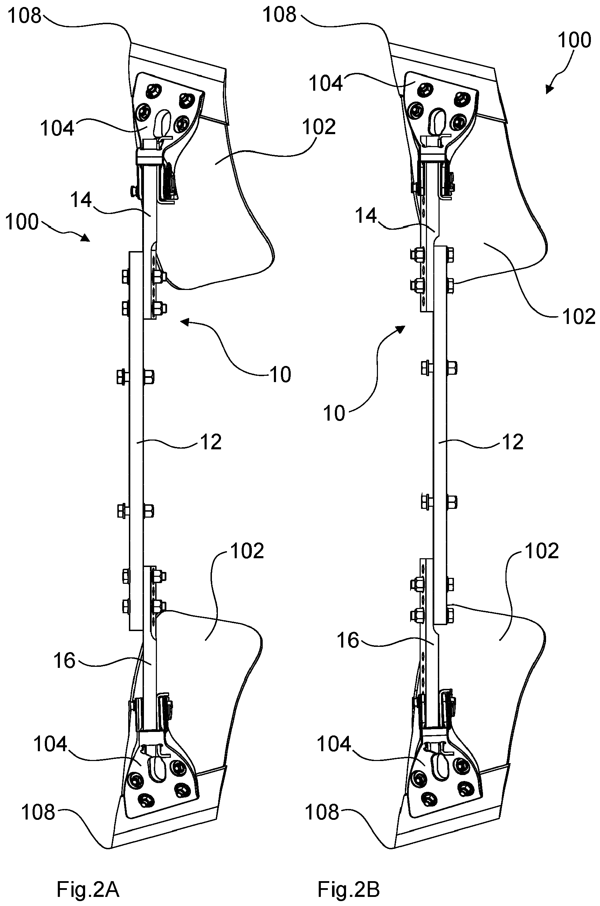

Die Fig. 2A, B zeigen eine Vorschälervorrichtung 100 in zwei unterschiedlichen Montagestellungen. Die Vorschälervorrichtung 100 umfasst die Trägervorrichtung 10 aus den Fig. 1A, B. Des Weiteren umfasst die Vorschälervorrichtung 100 zwei Vorschäler 102, wobei ein Vorschäler 102 an dem zweiten Trägerkörper 14 der Trägervorrichtung 10 und ein weiterer Vorschäler gegenüberliegend an dem dritten Trägerkörper 16 der Trägervorrichtung 10 montiert ist. Die Vorschäler 102 werden mittels jeweils einer Vorschälerkonsole 104 so an dem zweiten Trägerkörper 14 beziehungsweise dem dritten Trägerkörper 16 montiert, dass die Vorschälerspitze 108 der Vorschäler 102 jeweils von der Trägervorrichtung 10 abgewandt ausgerichtet ist. Die Vorschälervorrichtung 100 ist spiegelsymmetrisch aufgebaut.

Die in der Fig. 2A dargestellte Vorschälervorrichtung 100 umfasst die in der Fig. 1A dargestellte Trägervorrichtung 10 in der ersten Montagestellung. Die in der Fig. 2B dargestellte Vorschälervorrichtung 100 umfasst die in der Fig. 1B dargestellte Trägervorrichtung 10 in der zweiten Montagestellung. Dadurch, dass die Trägervorrichtung 10 der Vorschälervorrichtung in zwei unterschiedlichen Montagestellungen montiert werden kann, wird gleichzeitig die Änderung des Winkels der an der Trägervorrichtung 10 montierten Vorschäler 102 zur Arbeitsrichtung ermöglicht. Durch eine Änderung des Winkels der Vorschäler 102 ändert sich der Erdwurfwinkel und/oder die Erdwurfweite bei einem Eingriff in den Boden während der Bodenbearbeitung relativ zur Arbeitsrichtung auf einer landwirtschaftlichen Nutzfläche mittels der Vorschäler 102. Bei einem Wechsel der Montagestellung der Trägervorrichtung 10 bleibt die Position der Vorschälerspitze 108 identisch.

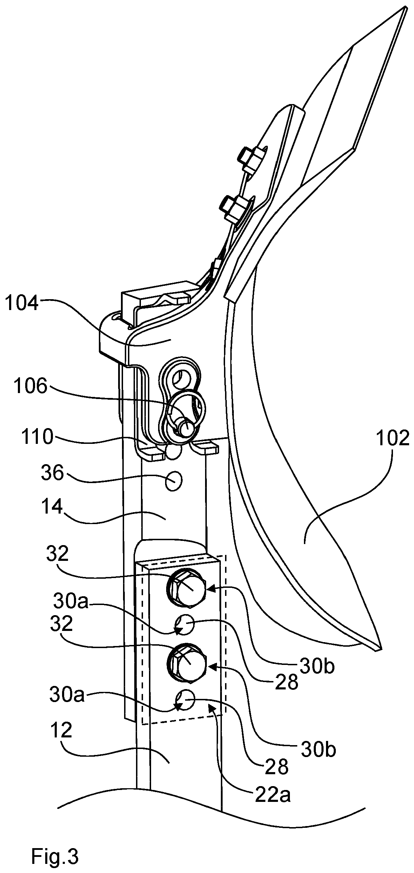

Die Fig. 3 zeigt eine Detailansicht des Montagebereichs 22a des ersten Trägerkörpers 12 mit dem montierten zweiten Trägerkörper 14 und einem an dem zweiten Trägerkörper 14 mittels einer Vorschälerkonsole 104 befestigten Vorschäler 102. Der erste Trägerkörper 12 und der zweite Trägerkörper 14 sind in der zweiten Montagestellung aneinander montiert. In der zweiten Montagestellung befinden sich die Montageausnehmungen 28 des Ausnehmungspaars 30a in Teildeckung, sodass eine Montage in der zweiten Montagestellung mittels der Schrauben 32 nicht durch das Ausnehmungspaar 30a möglich ist. In der zweiten Montagestellung ist eine Montage des ersten Trägerkörper 12 und des zweiten Trägerkörpers 14 mittels der Schrauben 32 nur durch das Ausnehmungspaar 30b möglich. Um ein Verkippen und/oder Verdrehen des ersten Trägerkörpers 12 gegenüber dem zweiten Trägerkörper 14 im Montagebereich 22a zu verhindern, werden in der zweiten Montagestellung zwei Ausnehmungspaare 30b zum Verschrauben der Trägerkörper 12, 14 verwendet, wobei ein Ausnehmungspaar 30a zwischen den Ausnehmungspaaren 30b ausgelassen wird.

Der Vorschäler 102 wird mittels der Vorschälerkonsole 104 an dem zweiten Trägerkörper 14 befestigt. Zum Befestigen der Vorschälerkonsole an dem zweiten Trägerkörper 14 umfasst der zweite Trägerkörper mehrere in Längsrichtung des zweiten Trägerkörpers 14 nebeneinander und beabstandet voneinander angeordnete Ausnehmungen 36. Die Vorschälerkonsole wird mittels einer der Ausnehmungen 36 und eines umsteckbaren Bolzens 106 an dem zweiten Trägerkörper befestigt, wobei zum Befestigen eine der Ausnehmung en 36 ausgewählt werden kann, um die Arbeitstiefe des Vorschälers 102 zur Bodenbearbeitung zu variieren. Mittels einer Zwischenlage 110, welche zwischen der Vorschälerkonsole 104 und dem zweiten Trägerkörper 14 angeordnet ist, kann die Position des Vorschälers quer zur Längsachse der Trägervorrichtung 10 in der Erstreckungsrichtung der Ausnehmungen 36 variiert werden, um die Relativposition des Vorschälers 102 zu einem Pflugkörper 204 zu verändern und auf diese Weise den Überschnitt einzustellen.

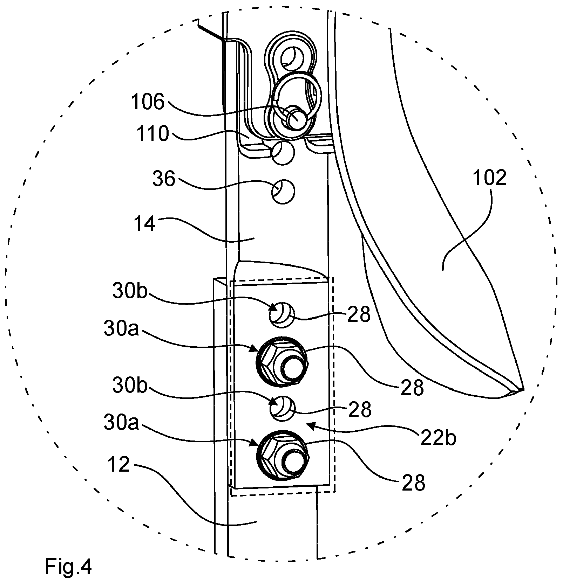

Die Fig. 4 zeigt eine Detailansicht des Montagebereichs 22b des zweiten Trägerkörpers 14, welcher an dem ersten Trägerkörper 12 befestigt ist. Der erste Trägerkörper 12 und der zweite Trägerkörper 14 sind in der ersten Montagestellung aneinander montiert. In der ersten Montagestellung befinden sich die Montageausnehmungen 28 des Ausnehmungspaars 30b in Teildeckung, sodass eine Montage in der ersten Montagestellung mittels der Schrauben 32 nicht durch das Ausnehmungspaar 30b möglich ist. In der ersten Montagestellung ist eine Montage des ersten Trägerkörper 12 und des zweiten Trägerkörpers 14 mittels der Schrauben 32 nur durch das Ausnehmungspaar 30a möglich. Um ein Verkippen und/oder Verdrehen des ersten Trägerkörpers 12 gegenüber dem zweiten Trägerkörper 14 im Montag ebereich 22a zu verhindern, werden in der ersten Montagestellung zwei Ausnehmungspaare 30a zum Verschrauben der Trägerkörper 12, 14 verwendet, wobei ein Ausnehmungspaar 30b zwischen den Ausnehmungspaaren 30a ausgelassen wird.

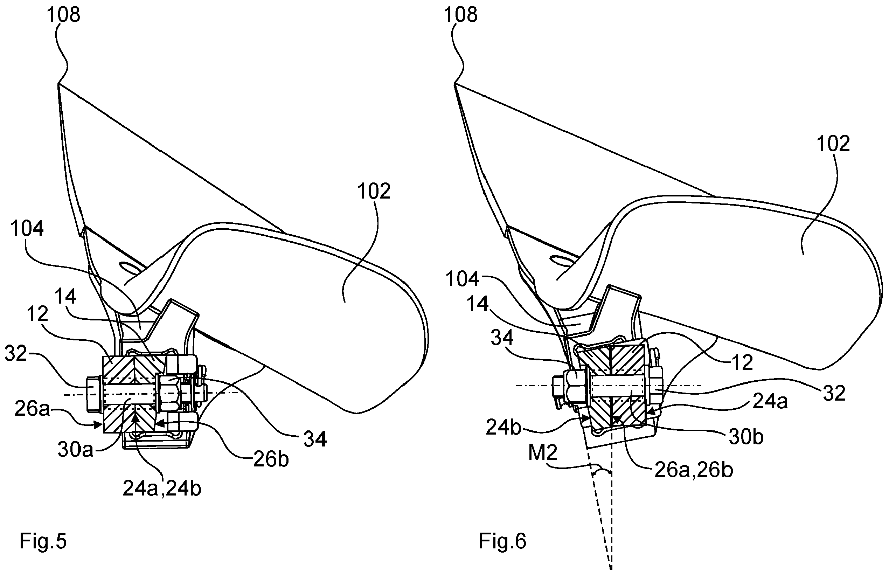

In Fig. 5 ist eine Schnittansicht der in der ersten Montagestellung montierten Trägervorrichtung 10 zu sehen. In der ersten Montagestellung sind die erste Kontaktfläche 24a des ersten Trägerkörpers 12 und die erste Kontaktfläche 24b des zweiten Trägerkörpers 14 kontaktbehaftet flächig mittels der Schrauben 32 und der Muttern 34 über die sich in Volldeckung befindenden Ausnehmungspaare 30a aneinander montiert. Die zweite Kontaktfläche 26a des ersten Trägerkörpers 12 und die zweite Kontaktfläche 26b des zweiten Trägerkörpers 14 sind in der ersten Montagestellung voneinander abgewandt ausgerichtet. Die erste Kontaktfläche 24a und die zweite Kontaktfläche 26a des ersten Trägerkörpers 12 sind um die Materialstärke des ersten Trägerkörpers 12 voneinander beabstandet und parallel zueinander ausgerichtet. Die erste Kontaktfläche 24b und die zweite Kontaktfläche 26b des zweiten Trägerkörpers 14 sind um die Materialstärke des zweiten Trägerkörpers 12 voneinander beabstandet und geneigt zueinander ausgerichtet. Die Materialstärke des zweiten Trägerkörpers 14 ist in seinem Montagebereich 22b in seiner Querrichtung trapezförmig reduziert, sodass ich die geneigte Kontaktfläche 26b ergibt. Da in der ersten Montagestellung die nicht geneigte Kontaktfläche 24b des zweiten Trägerkörpers flächig kontaktbehaftet an dem ersten Trägerkörper 12 befestigt ist, stellt sich an der Vorschälerkonsole 104 sowie dem Vorschäler 102 ein nicht geneigter Montagewinkel M1 von 0 Grad zwischen dem ersten Trägerkörper 12 und der Vorschälerkonsole 104 ein.

In Fig. 6 ist eine Schnittansicht der in der zweiten Montagestellung montierten Trägervorrichtung 10 zu sehen. In der zweiten Montagestellung sind die zweite Kontaktfläche 26a des ersten Trägerkörpers 12 und die zweite Kontaktfläche 26b des zweiten Trägerkörpers 14 kontaktbehaftet flächig mittels der Schrauben 32 und der Muttern 34 über die sich in Volldeckung befindenden Ausnehmungspaare 30b aneinander montiert. Die erste Kontaktfläche 24a des ersten Trägerkörpers 12 und die erste Kontaktfläche 24b des zweiten Trägerkörpers 14 sind in der ersten Montagestellung voneinander abgewandt ausgerichtet. Da in der zweiten Montagestellung die geneigte Kontaktfläche 26b des zweiten Trägerkörpers flächig kontaktbehaftet an dem ersten Trägerkörper 12 befestigt ist, stellt sich an der Vorschälerkonsole 104 sowie dem Vorschäler 102 eine Winkeländerung gegenüber der Arbeitsrichtung mit dem Montagewinkel M2 zwischen dem ersten Trägerkörper 12 und der Vorschälerkonsole 104 ein. Durch die Drehung des Vorschälers 102 um den Montagewinkel M2 stellt sich ein bei der Bodenbearbeitung geänderter Erdwurfwinkel und eine geänderte Erdwurfweite ein. Die zweite Montagestellung der Trägervorrichtung 10 mit dem Montagewinkel M2 des Vorschälers 102 wird beispielsweise eingestellt, wenn bei der Bodenbearbeitung einer landwirtschaftlichen Nutzfläche eine geänderte Arbeitsgeschwindigkeit gefahren werden soll. Die Vorschälerspitze 108 des Vorschälers 102 bleibt in der zweiten Montagestellung in der gleichen Position wie in der ersten Montagestellung ohne Neigung des Vorschälers 102.

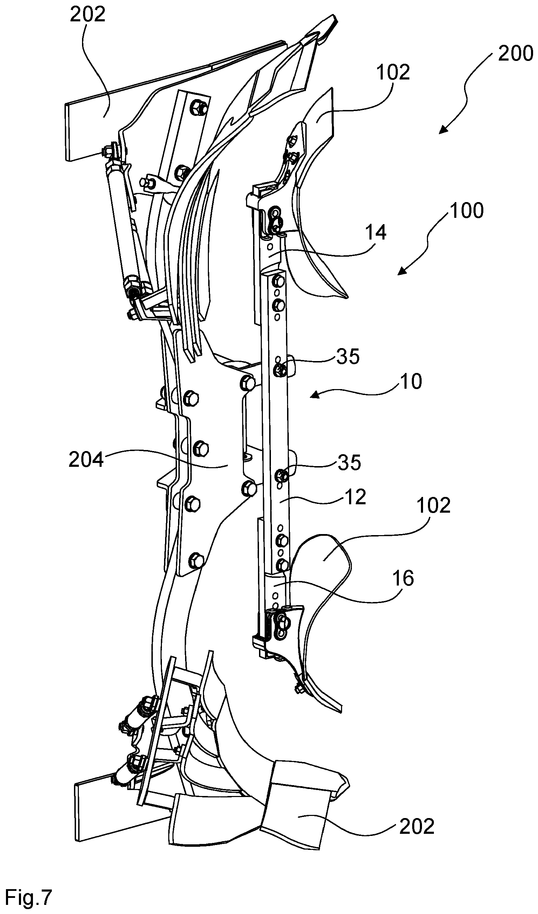

Die Fig. 7 zeigt eine Bodenbearbeitungseinheit 200, welche für den Einsatz an einem Wendepflug eingerichtet ist. Die Bodenbearbeitungseinheit 200 umfasst zwei Pflugkörper 202, welche einander gegenüberliegend an einem Pflugkörperträger 204 angeordnet sind. Die Bodenbearbeitungseinheit 200 umfasst zudem eine Vorschälervorrichtung 100 gemäß Fig. 2A mit einer Trägervorrichtung 10 und zwei Vorschälern 102, welche jeweils am oberen und unteren Ende der Trägervorrichtung 10 einander gegenüber an den Trägerkörpern 14, 16 und jeweils benachbart zu den Pflugkörpern 202 angeordnet sind. Die Vorschälervorrichtung 100 ist über den ersten Trägerkörper 12 der Trägervorrichtung 10 an dem Pflugkörperträger 204 mittels Schrauben 35 befestigt. Die Bodenbearbeitungseinheit 200 ist im Wesentlichen spiegelsymmetrisch aufgebaut.

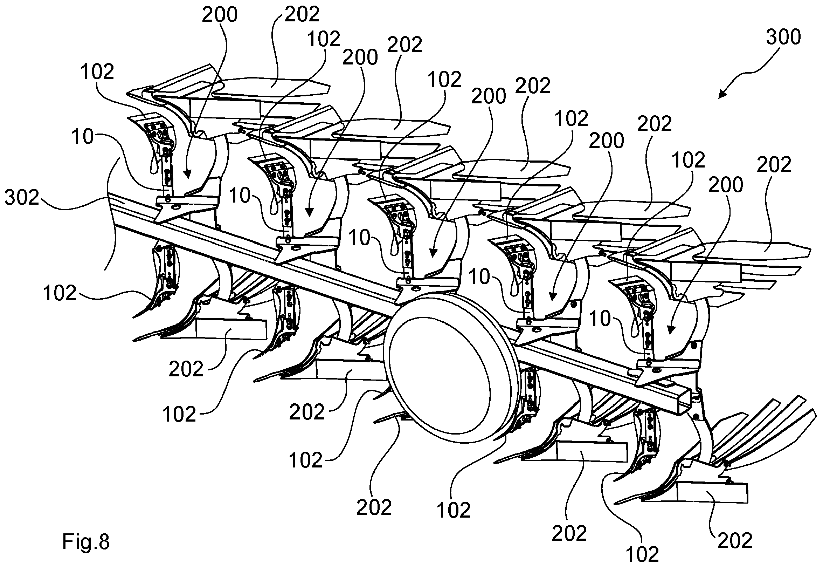

Die Fig. 8 zeigt ein als Wendepflug ausgebildetes landwirtschaftliches Bodenbearbeitungsgerät 300. Das Bodenbearbeitungsgerät umfasst mehrere Bodenbearbeitungseinheiten 200 gemäß Fig. 7. Die Bodenbearbeitungseinheiten 200 sind gleichmäßig beabstandet hintereinander an einem Rahmen 302 des Bodenbearbeitungsgeräts 300 angeordnet. Bei einem Bearbeitungsvorgang auf einer landwirtschaftlichen Nutzfläche wird das Bodenbearbeitungsgerät 300 von einem Zugfahrzeug, beispielsweise von einem Traktor, gezogen. Die Vorschäler 102 sowie die Pflugkörper 202 greifen bei einem Bearbeitungsvorgang in den Boden der Nutzfläche. Die Pflugkörper 202 ziehen Furchen in den Boden. Die Vorschäler 102 brechen den Boden unmittelbar vor den Pflugkörpern 202 auf und befördern Erdmaterial der obersten Bodenschicht samt Ernterückständen in die Furchen. Durch das Wechseln der Montagestellung der Trägervorrichtungen 10 und somit des Montagewinkels der Vorschäler 102 können der Wurfwinkel und die Wurfweite des Erdmaterials auf die Umgebungsbedingungen oder an die Arbeitsgeschwindigkeit des Bodenbearbeitungsgeräts 300 angepasst werden.

Bei einem als Wendepflug ausgebildeten Bodenbearbeitungsgerät 300 kann bei einer Änderung der Fahrtrichtung der Rahmen 302 um 180 Grad um seine Längsachse gedreht werden, sodass die oben angeordneten Pflugkörper 202 und Vorschäler 102 in den Boden eingreifen und die zuvor unten angeordneten Pflugkörper 202 und Vorschäler 102 in die obere Position verbracht werden.

### Bezugszeichenliste

- 10: Trägervorrichtung
- 12: erster Trägerkörper
- 14: zweiter Trägerkörper
- 16: dritter Trägerkörper
- 18a-18c: erste Seite
- 20a-20c: zweite Seite
- 22a, 22b: Montagebereich
- 24a, 24b: erste Kontaktfläche
- 26a, 26b: zweite Kontaktfläche
- 28: Montageausnehmungen
- 30a, 30b: Ausnehmungspaar
- 32: Schrauben
- 33: Schrauben
- 34: Muttern
- 35: Muttern
- 36: Ausnehmungen

- 100: Vorschälervorrichtung
- 102: Vorschäler
- 104: Vorschälerkonsole
- 106: Bolzen
- 108: Vorschälerspitze
- 110: Zwischenlage

- 200: Bodenbearbeitungseinheit
- 202: Pflugkörper
- 204: Pflugkörperträger

- 300: landwirtschaftliches Bodenbearbeitungsgerät
- 302: Rahmen

- M1, M2: Montagewinkel

## Patentansprüche

**1.** Trägervorrichtung (10) zum Tragen eines Bodenbearbeitungswerkzeugs für ein landwirtschaftliches Bodenbearbeitungsgerät (300), insbesondere eines Vorschälers (102) für einen Pflug, mit
- einem ersten Trägerkörper (12), welcher dazu eingerichtet ist, an einem Rahmen (302) des landwirtschaftlichen Bodenbearbeitungsgeräts (300) befestigt zu werden; und
- einem zweiten Trägerkörper (14), welcher dazu eingerichtet ist, an dem ersten Trägerkörper (12) befestigt zu werden und einen Vorschäler (102) zu tragen,
wobei der erste Trägerkörper (12) und der zweite Trägerkörper (14) kontaktbehaftet in zwei Montagestellungen direkt aneinander montierbar sind,
**dadurch gekennzeichnet, dass** der erste Trägerkörper (12) und der zweite Trägerkörper (14) in der ersten Montagestellung eine erste Längsdrehwinkelbeziehung und in der zweiten Montagestellung eine zweite Längsdrehwinkelbeziehung zueinander aufweisen.

**2.** Trägervorrichtung (10) nach Anspruch 1,
**dadurch gekennzeichnet, dass** der erste Trägerkörper (12) und der zweite Trägerkörper (14) derart gestaltet sind, dass der zweite Trägerkörper (14) in der ersten Montagestellung auf einer ersten Seite (18a) des ersten Trägerkörpers (12) und in der zweiten Montagestellung auf einer zweiten Seite (20a) des ersten Trägerkörpers (12) angeordnet ist, wobei die erste Seite (18a) und die zweite Seite (20a) des ersten Trägerkörpers (12) vorzugsweise gegenüberliegend angeordnet sind.

**3.** Trägervorrichtung (10) nach Anspruch 1 oder 2,
**dadurch gekennzeichnet, dass** der erste Trägerkörper (12) und der zweite Trägerkörper (14) jeweils einen Montagebereich (22a, 22b) mit einer ersten und einer zweiten Kontaktfläche (24a, 24b, 26a, 26b) umfassen, wobei der erste und der zweite Trägerkörper (12, 14) vorzugsweise so gestaltet sind, dass in der ersten Montagestellung die erste Kontaktfläche (24a) des ersten Trägerkörpers (12) und die erste Kontaktfläche (24b) des zweiten Trägerkörpers (14) kontaktbehaftet und vorzugsweise flächig aneinander montiert sind und in der zweiten Montagestellung die zweite Kontaktfläche (26a) des ersten Trägerkörpers (12) und die zweite Kontaktfläche (26b) des zweiten Trägerkörpers (14) kontaktbehaftet und vorzugsweise flächig aneinander montiert sind.

**4.** Trägervorrichtung (10) nach Anspruch 3,
**dadurch gekennzeichnet, dass**
- die erste Kontaktfläche (24a) und die zweite Kontaktfläche (26a) des ersten Trägerkörpers (12) beabstandet zueinander angeordnet sind; und/oder
- die erste Kontaktfläche (24b) und die zweite Kontaktfläche (26b) des zweiten Trägerkörpers (14) beabstandet zueinander angeordnet sind.

**5.** Trägervorrichtung (10) nach einem der Ansprüche 3 oder 4,
**dadurch gekennzeichnet, dass** in der ersten Montagestellung die zweite Kontaktfläche (26a) des ersten Trägerkörpers (12) und die zweite Kontaktfläche (26b) des zweiten Trägerkörpers (14) kontaktfrei und voneinander abgewandt ausgerichtet sind und in der zweiten Montagestellung die erste Kontaktfläche (24a) des ersten Trägerkörpers (12) und die erste Kontaktfläche (24b) des zweiten Trägerkörpers (14) kontaktfrei und voneinander abgewandt ausgerichtet sind.

**6.** Trägervorrichtung (10) nach einem der Ansprüche 3 bis 5,
**dadurch gekennzeichnet, dass**
- die erste und die zweite Kontaktfläche (24a, 26a) des ersten Trägerkörpers (12) parallel zueinander angeordnet sind; und/oder
- die erste und die zweite Kontaktfläche (24b, 26b) des zweiten Trägerkörpers (14) geneigt zueinander angeordnet sind.

**7.** Trägervorrichtung (10) nach einem der vorstehenden Ansprüche,
**dadurch gekennzeichnet, dass** der erste Trägerkörper (12) und der zweite Trägerkörper (14) jeweils zumindest zwei Montageausnehmungen (28) aufweisen,
wobei eine erste Montageausnehmung (28) des ersten Trägerkörpers (12) und eine erste Montageausnehmung (28) des zweiten Trägerkörpers (14) ein erstes Ausnehmungspaar (30a) und eine zweite Montageausnehmung (28) des ersten Trägerkörpers (12) und eine zweite Montageausnehmung (28) des zweiten Trägerkörpers (14) ein zweites Ausnehmungspaar (30b) bilden.

**8.** Trägervorrichtung (10) nach Anspruch 7,
**dadurch gekennzeichnet, dass** sich
- die Montageausnehmungen (28) des ersten Ausnehmungspaars (30a) in der ersten Montagestellung in Volldeckung und vorzugsweise in der zweiten Montagestellung in Teildeckung, und
- die Montageausnehmungen (28) des zweiten Ausnehmungspaars (30b) in der zweiten Montagestellung in Volldeckung und vorzugsweise in der ersten Montagestellung in Teildeckung befinden.

**9.** Trägervorrichtung (10) nach einem der Ansprüche 7 oder 8,
**dadurch gekennzeichnet, dass** die Montageausnehmungen (28) in den Montagebereichen (22a, 22b) des ersten und zweiten Trägerkörpers (12, 14) angeordnet sind.

**11.** Trägervorrichtung (10) nach einem der vorstehenden Ansprüche,
**dadurch gekennzeichnet, dass** der Vorschäler (102) derart an dem zweiten Trägerkörper (14) montierbar ist, dass die Position des Vorschälers (102) quer zu der Längsachse des zweiten Trägerkörper (14) einstellbar ist.

**12.** Trägervorrichtung (10) nach einem der vorstehenden Ansprüche,
**gekennzeichnet durch**
- einen dritten Trägerkörper (16), welcher dazu eingerichtet ist, gegenüberliegend zum zweiten Trägerkörper (14) an dem ersten Trägerkörper (12) befestigt zu werden und einen weiteren Vorschäler (102) zu tragen,
wobei der dritte Trägerkörper (16) und der erste Trägerkörper (12) kontaktbehaftet in zwei Montagestellungen direkt aneinander montierbar sind und der erste Trägerkörper (12) und der dritte Trägerkörper (16) in der ersten Montagestellung eine erste Längsdrehwinkelbeziehung und in der zweiten Montagestellung eine zweite Längsdrehwinkelbeziehung zueinander aufweisen.

**13.** Vorschälervorrichtung (100) für ein landwirtschaftliches Bodenbearbeitungsgerät (300), insbesondere für einen Pflug, mit
- einer zumindest einen ersten und einen zweiten Trägerkörper (12, 14) umfassenden Trägervorrichtung (10), und
- zumindest einem Vorschäler (102), welche an dem zweiten Trägerkörper (14) der Trägervorrichtung (10) befestigt ist,
**dadurch gekennzeichnet, dass** die Trägervorrichtung (10) nach einem der vorstehenden Ansprüche ausgebildet ist.

**14.** Vorschälervorrichtung (100) nach Anspruch 13,
**dadurch gekennzeichnet, dass** der Vorschäler (102) derart starr an dem zweiten Trägerkörper (14) befestigt ist, dass sich in der ersten Montagestellung der Trägervorrichtung (10) ein erster Montagewinkel (M1) am Vorschäler (102) und in der zweiten Montagestellung der Trägervorrichtung (10) ein zweiter Montagewinkel (M2) am Vorschäler (102) einstellt.

**15.** Vorschälervorrichtung (100) nach Anspruch 13 oder 14,
**dadurch gekennzeichnet, dass** die Position einer Vorschälerspitze (108) des Vorschälers (102) in Bezug auf einen Referenzpunkt am ersten Trägerkörper (12) der Trägervorrichtung (10) in der ersten Montagestellung und in der zweiten Montagestellung der Trägervorrichtung (10) im Wesentlichen gleich ist.

**16.** Bodenbearbeitungseinheit (200) für ein landwirtschaftliches Bodenbearbeitungsgerät (300), insbesondere für einen Pflug, mit
- einem Pflugkörperträger (204);
- zumindest einem Pflugkörper (202), welcher an dem Pflugkörperträger (204) befestigt ist;
- einer Vorschälervorrichtung (100), welche eine Trägervorrichtung (10) und zumindest einen an der Trägervorrichtung (10) befestigten Vorschäler (102) umfasst, wobei die Trägervorrichtung (10) an dem Pflugkörperträger (204) befestigt ist;
**dadurch gekennzeichnet, dass** die Trägervorrichtung (10) nach einem der Ansprüche 1 bis 12 und/oder die Vorschälervorrichtung (100) nach einem der Ansprüche 13 bis 15 ausgebildet ist.
